# FASCICULE DE BREVET EUROPEEN

(11) **EP 0 941 633 B1**
(45) Date de publication et mention de la délivrance du brevet: **25.04.2001**
(21) Numéro de dépôt: 97947135.6
(22) Date de dépôt: 25.11.1997
(51) Int. Cl.: H05B 6/12

(54) **DISPOSITIF DE CHAUFFAGE D'UN RECIPIENT CULINAIRE**
HEIZKÖRPER FÜR EIN KOCHGEFÄSS
DEVICE FOR HEATING A COOKING VESSEL

(30) Priorité: 26.11.1996 FR 9614475
(43) Date de publication de la demande: 15.09.1999
(73) Titulaire: Simeray, Janick, 92700 Colombes (FR)
(72) Inventeur: SIMERAY, Janick, F-92700 Colombes (FR); MAY, Yves, F-78000 Versailles (FR)
(74) Mandataire: Breese, Pierre
(86) Numéro de dépôt international: FR9702125
(87) Numéro de publication internationale: WO9824270

(56) Documents cités:
- DE-A- 2 505 341
- DE-A- 2 505 395
- US-A- 3 843 857
- US-A- 4 910 372

## Description

La présente invention concerne le chauffage des récipients alimentaires en vue de maintenir à la bonne température les aliments qui s'y trouvent.

Lorsque l'on consomme des mets chauds, ils se refroidissent rapidement et il est désirable de les chauffer pour les garder à la bonne température. A cet effet, on a conçu des chauffe-plats qui sont chauffés électriquement par effet Joule ou par une capsule de gaz ou des bougies. Ce système est relativement dangereux puisque l'on amène la tension du réseau ou une flamme sur la table. Par ailleurs, cela ne résout pas le problème du refroidissement dans les assiettes.

Pour ces dernières, une première solution, utilisée principalement dans les restaurants, consiste à servir dans des assiettes qui ont été préalablement chauffées. Ceci nécessite une organisation importante et des manipulations avec risque de brûlures ; de toutes façons, la capacité thermique étant faible, les mets se refroidissent rapidement avant qu'on ait fini de les consommer.

Une autre solution consiste à chauffer électriquement les assiettes pendant que l'on mange soit au moyen de coussins chauffants placés sous les assiettes, soit au moyen de résistances chauffantes intégrées dans les assiettes. Dans le premier cas, il existe le risque de brûlures par le coussin chauffant lorsque l'assiette n'est pas en place et dans le deuxième cas, l'assiette est lourde et reliée à un câble électrique, ce qui n'est pas pratique et peut être dangereux.

Dans le cas des restaurants en libre service, en particulier dans les restaurants d'entreprise, on est amené à manger le met chaud en premier avant qu'il ne se refroidisse. C'est pourquoi on prévoit généralement des meubles où l'on peut maintenir les assiettes au chaud pendant que l'on consomme les hors-d'oeuvre.

On connaît bien le brevet De 25 05 341 qui décrit par le détail deux réalisations de récipients chauffés par induction, destinés à être placés en vis à vis d'un inducteur.

La nouveauté consiste en la réalisation d'une spirale conductrice sur le fond du récipient pour guider les courants induits et surtout, en la réalisation d'un 'strap' pour refermer la spirale.

Deux méthodes de réalisation de ce strap sont détaillées, l'une par insertion dans la matière de l'assiette d'un fil conducteur, l'autre par dépôt métallique sur l'assiette.

On ne voit pas précisé dans ce document le support, (plateau, set, etc) muni d'un système d'alimentation complet comportant source de tension et hacheur de courant.

On connaît également deux modèles d'utilité allemands traitent un sujet proche de notre demande.

Il s'agit de la demande DE 296 12 514 du 9 7 96 et de la demande DE 296 21 541 du 12 12 96.
- Le premier modèle montre un plateau comportant des éléments inductifs, il est antérieur à notre demande.

Ce plateau avec son inducteur doit être connecté à un élément extérieur adapté générateur de courant harmonique, lui même connecté à une source de tension.

Il ne s'agit pas là encore d'un support comportant un inducteur son alimentation et sa source de tension intégrée.
- Le deuxième modèle est postérieur à notre demande.

Le premier modèle a été déposé le 9 juillet 96 mais a été publié seulement le 12 décembre 96. Il ne peut pas constituer une antériorité opposable à notre demande. C'est un droit antérieur en Allemagne.

En résumé le document De 25 05 341 n'est pas opposable à la brevetabilité de la revendication 1.

Par ailleurs le document intercalaire constitué par le modèle d'utilité 29 612 514 n'est pas non plus opposable à la revendication 1, de plus la combinaison de ces documents si elle était possible, ne peut être opposée à la brevetabilité de la revendication 1 que nous allons exposer:

Le problème à la base de l'invention est de fournir un dispositif de chauffage mobile qui permet, avec des moyens simples, de chauffer ou de maintenir à température une assiette ou un plat sans risque de brûlures, sans manipulation compliquée, en particulier sans avoir à effectuer un branchement, et sans flamme ni tension électrique pouvant être dangereuse.

Par ailleurs, l'invention permet de régler la température de l'assiette ou du plat toujours sans manipulation compliquée.

A cet effet, l'invention a pour objet un dispositif de chauffage mobile d'un récipient culinaire, tel qu'une assiette ou un plat, posé sur une table, en vue de garder au chaud les aliments contenus dans ledit récipient, caractérisé en ce qu'il comporte :
un support de récipient, tel qu'un plateau ou un set de table, dans lequel sont disposés un module d'alimentation comportant une source d'énergie électrique sous une tension continue de sécurité, un hacheur de courant à fréquence élevée alimenté par ladite source et au moins un inducteur plat de faible épaisseur alimenté par le hacheur et créant un champ électromagnétique perpendiculaire au plan de la table, et
un induit plat de faible épaisseur constitué de spires fermées sur elles-mêmes et placé sous le récipient parallèlement au plan du récipient mobile,
le récipient étant placé sur le support et l'induit étant couplé magnétiquement avec l'inducteur de telle sorte que des courants de Foucault circulent dans l'induit.

Le chauffage ne se produit que lorsque le récipient est placé sur le support et il n'y pas de chauffage, et donc pas de risque de brûlure, lorsque l'on pose les mains sur le set de table; de même si l'on pose un objet métallique, tel qu'un couvert ou une montre, sur le support, il n'y a pratiquement pas de chauffage non plus.

Dans le cas des restaurants à libre service, il n'est plus nécessaire de prévoir d'armoire chauffe-assiettes et l'on peut manger son repas dans l'ordre normal tout en ayant un mets chaud à bonne température.

Il n'y aucune manipulation particulière puisqu'il suffit de poser l'assiette sur le support ; en particulier, il n'y a pas à réaliser de branchement électrique, le support restant branché en permanence.

Par ailleurs, la tension présente dans le support est une tension de sécurité, par exemple 12 V.

L'utilisation d'une fréquence élevée permet d'augmenter l'efficacité du couplage, donc du chauffage.

Avantageusement, le ou les inducteurs présentent une inductance élevée à la fréquence du générateur de tension et une résistance faible et l'induit présente, ramené au primaire, une inductance faible et une résistance sensiblement égale au rapport du carré de la tension de la source à la puissance nécessaire pour le chauffage.

Cette disposition permet d'obtenir un rendement maximum pour le chauffage.

Selon une autre caractéristique de l'invention, le champ électromagnétique créé par l'inducteur et les spires de l'induit ne sont pas symétriques de révolution de telle manière que le couplage magnétique de l'induit avec l'inducteur varie en fonction de la position angulaire relative de l'inducteur et de l'induit.

Grâce à cette variation du couplage, on peut régler la température du récipient.

Selon un mode de réalisation de l'invention, l'inducteur et l'induit sont de forme ovale.

Selon un autre mode de réalisation de l'invention, l'inducteur comporte deux bobines adjacentes sensiblement circulaires branchées en série et créant des champs électromagnétiques de directions opposées et l'induit comporte deux ensembles adjacents de spires sensiblement circulaires.

Cette disposition permet également d'obtenir un couplage variable, mais aussi de réduire fortement le rayonnement électromagétique de l'inducteur et, par suite, les perturbations sur l'environnement.

Selon un premier mode de réalisation de l'invention, le support de récipient est un plateau et la source d'énergie électrique est un générateur électrochimique.

Avantageusement, le générateur électrochimique est un élément rechargeable et le module d'alimentation comporte un dispositif de comparaison de la tension aux bornes du ou des inducteurs et de la tension de la source et un circuit de contre-réaction commandant le générateur de tension pulsée de telle manière que son rapport cyclique varie en sens inverse de la tension aux bornes du ou des inducteurs.

Cette disposition permet de recharger l'élément rechargeable par induction entre les supports.

Selon encore une autre caractéristique de l'invention, le module d'alimentation est placé dans un logement disposé le long d'un bord du plateau et séparé du reste du plateau par un évidement longitudinal.

De cette manière, on peut superposer les plateaux en les plaçant tête bêche en vue de recharger les éléments rechargeables.

Avantageusement, le support de récipient comporte deux inducteurs, un inducteur sensiblement central et un inducteur disposé dans un coin.

Ceci permet de maintenir le récipient au chaud en le posant dans le coin pendant que l'on mange un autre mets, par exemple le hors d'oeuvre.

Selon un deuxième mode de réalisation de l'invention, le support de récipient est un set de table, la source d'énergie électrique est un circuit redresseur branché sur un transformateur fixé sous la table et le module d'alimentation est disposé dans une partie du set de table qui est repliée sous la table.

Avantageusement, le transformateur du module d'alimentation est fixé sous la table et le reste du module d'alimentation est disposé dans une partie du set de table repliée sous la table.

Ceci permet de simplifier la fabrication, l'ensemble des composants, à l'exception du transformateur, en particulier le hacheur de courant étant réalisé dans le support.

Avantageusement, la table comporte un transformateur commun alimentant l'ensemble des sets de table disposés sur la table et les sets de table sont alimentées par un câble circulant sous la table à la périphérie de celle-ci.

Cette disposition permet de simplifier la structure et de réduire le prix de revient. De plus, elle permet de faire une table avec une disposition quelconque des places des convives.

Selon un autre mode de réalisation de l'invention, l'inducteur est intégré dans la face supérieure de la table.

Cette disposition est particulièrement avantageuse pour les restaurants, en particulier ceux à libre service.

Avantageusement, le support de récipient comporte au moins un bossage disposé en correspondance avec un inducteur et servant au positionnement du récipient.

Ceci permet d'obtenir automatiquement un chauffage optimal, car le centrage de l'assiette s'effectue automatiquement, ce qui assure un couplage optimal.

Selon encore une autre caractéristique de l'invention, le récipient comporte un thermomètre, tel qu'un thermomètre à cristaux liquides, sur sa face supérieure.

De cette manière, on peut régler et contrôler plus précisément la température de l'assiette.

D'autres caractéristiques et avantages de l'invention ressortiront de la description qui suit, faite à titre illustratif et nullement limitatif, en se référant aux dessins ci-annexés sur lesquels :
la figure 1 représente en vue de côté un premier mode de réalisation de l'invention dans lequel le support de récipient est un plateau,
la figure 2 est une de dessus du plateau de la figure 1,
la figure 3 est un schéma synoptique du module d'alimentation,
la figure 4 représente plusieurs plateaux superposés tête bêche en vue de la recharge de leurs éléments rechargeables,
la figure 5 représente un deuxième mode de réalisation de l'invention dans lequel le support de récipient est un set de table,
les figures 6 et 7 illustrent un mode de réalisation de l'inducteur,
la figure 8 illustre un mode de réalisation de l'induit correspondant à l'inducteur des figures 6 et 7,
la figure 9 représente un mode de réalisation du set de table,
la figure 10 représente le set de table de la figure 9 en place sur la table,
la figure 11 est une coupe transversale du set de table de la figure 9, et
la figure 12 est le schéma synoptique du module d'alimentation d'un dispositif fixe tel qu'un chauffe plat disposé au centre d'une table.

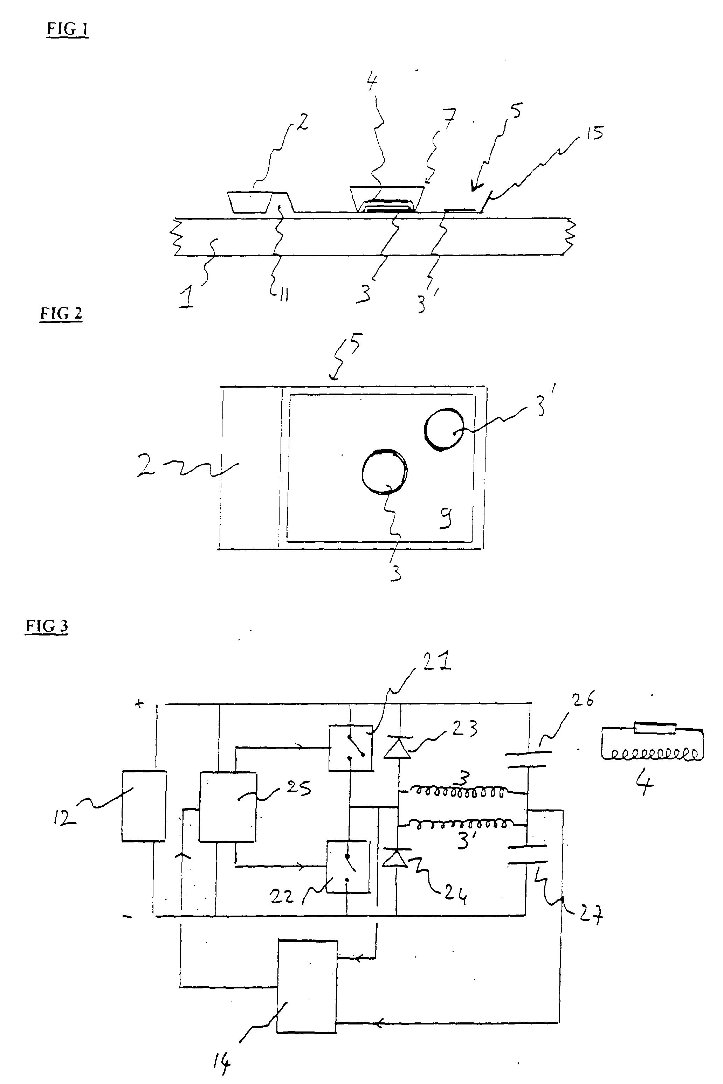

La figure 1 représente, de manière schématique, un dispositif de chauffage selon l'invention ; il est constitué par un plateau 5 installé sur une table 1 dont on ne voit qu'une partie et il comporte trois éléments, à savoir un module d'alimentation 2, deux inducteurs 3 et 3' et un induit 4. Les inducteurs 3 et 3' sont des inducteurs plats intégrés dans le fond du plateau 5 et branchés sur le module d'alimentation 2.

L'induit 4 est plat et disposé sur le fond d'une assiette 7 qui est placée sur le plateau 5 au dessus de l'inducteur 3 de manière à se trouver dans le champ électromagnétique, perpendiculaire au plan de la table, créé par l'inducteur 3.

Comme on peut le voir sur la figure 2, l'inducteur 3 est disposé sensiblement au centre du plateau 5 et le deuxième inducteur 3' est disposé dans le coin avant droit ; il sert à maintenir le plat principal au chaud pendant que l'on consomme l'entrée.

Le module d'alimentation est placé dans un logement 8 aménagé le long d'un côté du plateau et séparé de la partie 9 du plateau recevant les mets par un évidement longitudinal 11.

La figure 3 est le schéma synoptique du module d'alimentation. Il comporte une source d'énergie électrique 12 sous tension continue de sécurité, par exemple 12 V, qui est branchée sur un hacheur de courant réversible comportant essentiellement deux transistors 21 et 22, deux diodes de roue libre 23 et 24 et un bloc de commande 25. L'ensemble des deux inducteurs 3 et 3', qui sont branchés en parallèle,est branché en série avec un condensateur 26, respectivement 27, entre le point milieu du hacheur et chacune des bornes de sortie de ce dernier.

La fréquence de la tension fournie par le hacheur de courant est élevée, par exemple environ 300 kHz, et les inducteurs 3 et 3' présentent pour cette fréquence une inductance qui est élevée et une résistance de faible valeur. Par contre, l'inductance de l'induit 4, ramené au primaire, c'est-à-dire au niveau de l'inducteur, est faible et sa résistance est élevée, elle est avantageusement optimisée pour la puissance maximale de chauffage, P, par exemple 15 à 20 W, et égale à V²/P, V étant la tension de la source.

Le module d'alimentation comporte un comparateur 14 qui compare la tension de la source 12 et la tension aux bornes des inducteurs. Il comporte un circuit de contre réaction commandant le hacheur de courant de telle manière que son rapport cyclique et, par suite, sa tension de sortie varient de manière inverse par rapport à la tension de la source 12.

Dans ce mode de réalisation, la source 12 est constituée par un élément rechargeable tel qu'un accumulateur qui peut être rechargé par un circuit de charge extérieur branché sur ses bornes.

Quand aucun induit n'est couplé avec les inducteurs 3 et 3', la tension aux bornes de ces derniers est élevée et le hacheur est commandé de manière à fournir une faible tension (rapport cyclique de faible valeur) et le module d'alimentation est à l'état de veille, sa consommation étant très faible.

Lorsqu'un induit 4 est placé au dessus d'un inducteur 3 ou 3', il y a un couplage entre eux, ce qui fait chuter la tension des inducteurs du fait de la faible résistance induite par l'induit. Le comparateur agit alors pour augmenter le rapport cyclique du hacheur et la source 12 débite pour alimenter l'inducteur qui crée des courants de Foucault dans l'induit et chauffe l'assiette 7.

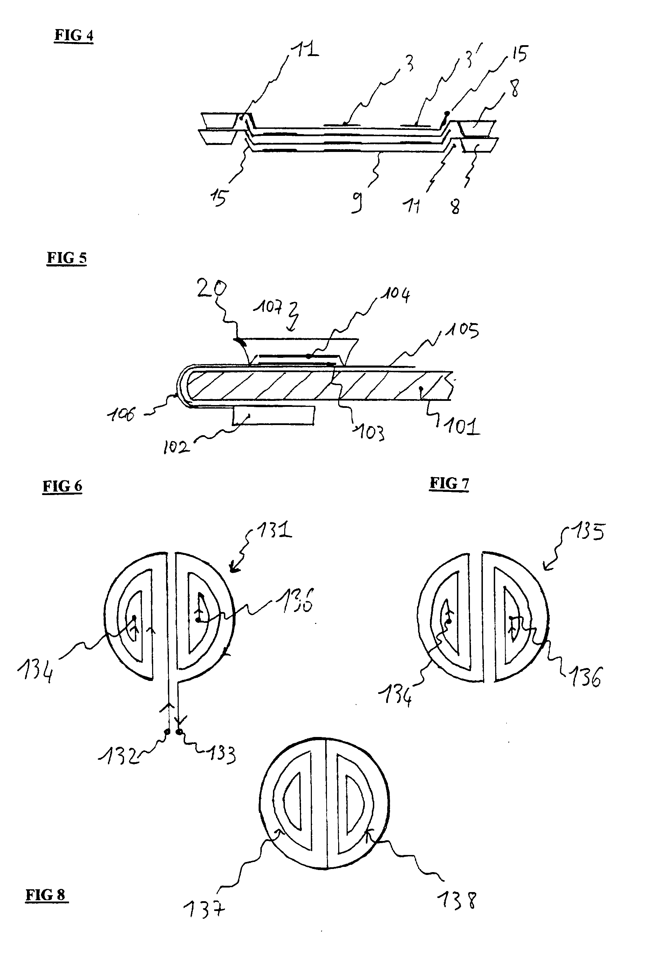

Pour recharger les éléments rechargeables, on pose les plateaux les uns sur les autres tête bêche en étant décalés comme représenté sur la figure 4 ; les bords 15 opposés aux logements 8 pénètrent alors dans les évidements 11 de telle manière que les fonds des parties 9 des plateaux sont en contact.

Les inducteurs 3 qui sont disposés au centre de la partie 9 du plateau sont alors disposés les uns au dessus des autres et donc couplés magnétiquement. Si le plateau inférieur de la pile de plateaux est relié à une source extérieure de recharge de son accumulateur, du fait que le hacheur de courant est réversible, le circuit de régulation va commander le hacheur du plateau du dessous pour fournir une tension élevée à l'inducteur 3 qui va induire une tension élevée dans l'inducteur 3 du plateau disposé au dessus dont le hacheur va recharger l'accumulateur.

Lorsque l'accumulateur d'un plateau sera rechargé, ce plateau rechargera le plateau suivant et l'ensemble des plateaux sera alors rechargé successivement à partir du plateau du bas.

La figure 5 représente, de manière schématique, un deuxième mode de réalisation de l'invention ; il est constitué par un set de table 105 installé sur une table 101 dont on ne voit qu'une partie et il comporte trois éléments, à savoir le module d'alimentation 102, un inducteur 103 et un induit 104. L'inducteur 103 est un inducteur plat intégré dans le set de table 105 et branché sur le module d'alimentation 102.

L'induit 104 est plat et disposé sur le fond d'une assiette 107 qui est placée sur le set de table 105 au dessus de l'inducteur 103 de manière à se trouver dans le champ électromagnétique, perpendiculaire au plan de la table, créé par l'inducteur.

Avantageusement, le champ créé par l'inducteur 103 ne présente pas une symétrie de révolution et la forme des spires de l'induit 104 est adaptée au profil du champ de l'inducteur. Par exemple, la bobine de l'inducteur est de forme ovale et les spires de l'induit ont une forme correspondante. De cette manière si les grands axes de l'inducteur et de l'induit ne sont pas confondus, le couplage magnétique est moins grand et l'intensité des courants de Foucault dans l'induit est plus faible. Le chauffage est alors moins fort. On peut de cette façon régler et contrôler la température de l'assiette.

Pour faciliter ce réglage, l'assiette peut être munie d'un thermomètre, tel qu'un thermomètre à cristaux liquides, sur sa face supérieure.

Les figures 6 à 8 représentent un autre mode de réalisation d'un champ asymétrique. Dans ce cas, l'inducteur comporte deux bobines sensiblement circulaires disposées l'une à côté de l'autre et dont les directions du courant sont opposées de manière à créer deux champs adjacents de sens opposés.

La bobine est à double couche et constituée de deux enroulement plats disposés de part et d'autre d'un substrat. Les figures 6 et 7 représentent ces deux enroulements qui sont disposés l'un au dessus de l'autre. L'enroulement supérieur 131 de la figure 6 comporte deux bornes de raccordement132 et 133 au module d'alimentation ; il comprend une première spirale disposée entre la borne 132 et une première connexion 134 avec l'enroulement inférieur 135 de la figure 7 et une deuxième spirale enroulée dans l'autre sens et disposée entre une deuxième connexion 136 avec l'enroulement inférieur 135 et la borne 133. Les connexions entre les deux enroulements sont avantageusement réalisées au moyen d'une agrafe.

L'enroulement inférieur 135 comprend deux spirales reliées en série entre les connexions 134 et 136 et enroulées en sens inverses. La circulation du courant est indiquée par des flèches et on voit que l'on crée deux champs adjacents de sens opposés.

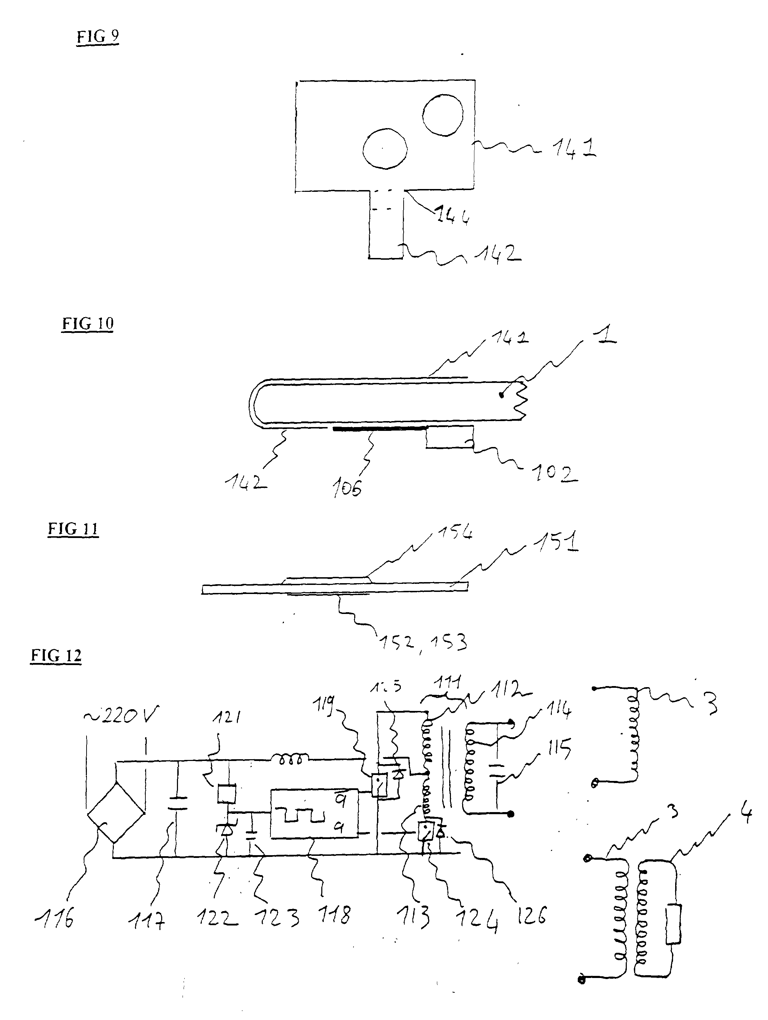

La figure 8 représente les spires de l'induit dans ce mode de réalisation ; il comporte deux groupes 137 et 138 de spires fermées sensiblement circulaires et coaxiales qui sont disposés en regard des deux bobines de l'inducteur.

La figure 9 représente un mode de réalisation du set de table ; il comprend une partie supérieure 141 venant se placer sur la table et une partie inférieure 142 venant se placer sous la table, comme représenté sur la figure 10, et comporte à cet effet des lignes de pliage 144.

La partie supérieure 141 comporte l'inducteur et la partie inférieure 142 comporte les circuits du module d'alimentation 106 à l'exception du transformateur 102.

La figure 11 représente en coupe transversale la partie supérieure du set de table 141 des figures 9 et 10. Il est constitué d'un substrat ou support 151 sur lequel sont fixées les deux couches 152 et 153 de bobinage de l'inducteur ; ces couches sont par exemple en résine, telle que la résine époxy, dans laquelle les enroulements, par exemple en cuivre, sont noyés. Ce support peut être réalisé en une matière souple et adhésive telle que du caoutchouc. On peut aussi utiliser du bois ou du liège car ce support ne chauffe pas et ne risque de brûler ou de s'altérer à la chaleur.

Avantageusement, la face supérieure du set de table comporte un bossage 154 qui permet de bien positionner l'induit de l'assiette au dessus de l'inducteur 152 et 153.

La figure 12 est le schéma du module d'alimentation 2 destiné à un chauffe plat fixe disposé au centre d'une table. Il comporte un transformateur abaisseur comprenant un primaire 112 à point milieu 113 et un secondaire 114 qui comporte un condensateur parallèle 115 et dont les bornes sont reliées à l'inducteur 103. Ce transformateur 111 fournit une tension de sécurité de 12 V à partir de la tension du réseau. Celle-ci est envoyée sur l'un des enroulements du primaire 112 par l'intermédiaire d'un hacheur de courant qui comprend un pont redresseur 116 qui comporte un condensateur parallèle 117 à sa sortie. La borne positive de la tension continue de sortie du pont redresseur 116 est envoyée, par l'intermédiaire d'une résistance 121, d'une diode Zener 122 et d'un condensateur 123 à l'entrée d'une bascule 118 dont la fréquence est de 300 kHz et dont la sortie Q est envoyée sur la base d'un transistor 119 de type FET branché en parallèle sur le primaire 112 du transformateur 111.

La sortie Q de la bascule 118 est envoyée sur la base d'un deuxième transistor de type FET 124 qui est branché en série entre le primaire 112 du transformateur 111 et la borne négative de la sortie du pont redresseur 116. Les deux transistors 119 et 121 sont protégés par une diode 125, respectivement 126.

Le set de table peut être disposé à poste fixe sous la nappe, en particulier dans le cas de restaurants ; il peut même être intégré dans la table. Pour un usage domestique, on peut prévoir des sets amovibles que l'on dispose comme on le désire en fonction du nombre de convives.

Avantageusement, on prévoit un seul transformateur commun pour une table ; il est disposé au centre et peut être relié à chaque set de table au moyen d'un câble disposé sous la table à la périphérie de celle-ci. On peut également prévoir un set central servant de chauffe-plats.

Sur les assiettes, l'induit peut être fixé sous le fond lors de la fabrication de l'assiette. Il peut également être fixé par collage ou analogue par l'utilisateur. Ainsi, on peut prévoir de vendre aux usagers un transformateur, des sets de table et des plaques d'induit qui sont collées sur le fond des assiettes existant déjà dans la maison ou dans le restaurant.

Mais l'induit peut également être réalisé sous la forme d'un dépôt conducteur sur ou sous le fond de l'assiette.

Ainsi, on peut prévoir de vendre aux usagers un transformateur, des sets de table et des plaques d'induit qui sont collées sur le fond des assiettes existant déjà dans la maison ou dans le restaurant.

L'invention n'est pas limitée aux modes de réalisation représentés; en particulier, les inducteurs des figures 6 et 7 peuvent être réalisés dans un plateau. Par ailleurs, le set de table peut également comporter une source constituée par un accumulateur.

En outre, comme représenté sur la figure 5, on peut disposer un détecteur de température 20, tel qu'un thermomètre à cristaux liquides, sur l'assiette afin de mieux contrôler et régler la température des aliments.

Une variante de réalisation de l'invention par combinaison des éléments présentés ci dessus réunit dans un support, un plateau ou un set de table ou tout autre support ou enveloppe de récipient alimentaire, un inducteur comme le 3 figure 2 relié à une électronique hacheur sous tension de sécurité comme celle décrite figure 3, une source de tension 12 figure 3 constituée par un élément rechargeable tel qu'un accumulateur qui peut être rechargé, et un circuit de rechargement connecté sur le secteur pendant la charge.

Selon un exemple de réalisation de cette variante, le chargeur est un circuit du type décrit figure 12 comportant un redresseur 116, un condensateur de lissage 117, des éléments de commutation 122, 123 et 118 et un transistor 119. L'inductance 113 est l'inductance 3 ou 3' de la figure 3. Un condensateur non apparent sur le schéma est placé en série entre l'inductance 3 et 3' et le transistor 119.

Dans ce mode de réalisation, et en l'absence d'induit 4 l'électronique de la figure 12 agit en chargeur de courant de la batterie 12 figure 3 en collaborant avec les composant 32, 24, 3, 3', 26 et 27.

La fréquence de découpage de l'élément 118 est ajustée pour que le circuit 3, 3', 26, 27 agisse comme un oscillateur bouchon résonnant. La tension redressée aux bornes de 12 est alors une fraction de la tension redressée aux bornes de 116.

Une seconde variante de réalisation comporte un support de récipient avec la fonction d'enveloppe et un récipient alimentaire à fonction de boite ou de bouteille.

Par exemple, le support peut être un thermos ou un chauffe biberon, et le récipient alimentaire un biberon ou une bouteille.

Par exemple, le support peut être une cantine isolante thermique et le récipient alimentaire une boite de conserve ou bien une barquette surgelée.

Par exemple, le support peut être un dessous de verre ou un dessous de tasse et le récipient un verre ou une tasse.

Dans tous les cas le support comporte une source d'énergie électrique sous tension de sécurité, un hacheur de courant à fréquence élevée alimenté par la dite source et au moins un inducteur plat générant un champ magnétique vertical. Selon une réalisation préférentielle la source est une batterie rechargeable, et le support comporte également une électronique pour la recharge de la batterie. Cette électronique pour la recharge de la batterie est connectée au secteur.

Dans tout les cas le récipient alimentaire comporte un induit, placé en vis à vis de l'inducteur du support. Cet induit est parcouru par les courants induits et assure le maintient au chaud ou bien le réchauffage des denrées alimentaires.

Cette association d'un induit, d'une électronique de commutation, d'une batterie rechargeable et d'une électronique de recharge de la batterie sous tension secteur intégrés dans un support, et d'un récipient alimentaire muni d'un induit offre un service original et complet.

Elle assure un maintient au chaud des aliments, un moyen de chauffage et de réchauffage autonome et portable, sans contrainte ni combustion de gaz ou autre. La recharge rend le dispositif réutilisable un nombre indéfini de fois.

Les récipients alimentaires sont munis d'induits ou métalliques par leur construction.

La batterie fournit les besoins en énergie instantanés, elle contribue à réguler la puissance moyenne tirée sur le secteur. Ainsi elle contribue à la sécurité d'utilisation, car à faible puissance, la recharge sous tension secteur est robuste durable, compacte et peu couteuse. A faible tension le hacheur de courant sous tension sécuritaire est à la fois puissant et sécuritaire.

Ainsi, pour un Thermos chauffe biberon, l'usage domestique s'effectue en laissant l'objet en charge permanente, la batterie prend le relais quand le biberon chauffe. Muni d'un bouchon, il devient un thermos, autonome et transportable. Il permet de transporter le lait froid, et le déclenchement de l'induction alimentée par la batterie permet de chauffer le lait rapidement au moment opportun.

## Revendications

1. Dispositif de chauffage d'un récipient culinaire, en vue de garder au chaud les aliments contenus dans ledit récipient, caractérisé en ce qu'il comporte :
un support de récipient mobile, dans lequel sont disposés un module d'alimentation (2; 102) comportant une source d'énergie électrique sous une tension continue de sécurité, un hacheur de courant à fréquence élevée alimenté par ladite source et au moins un inducteur plat (3; 103) de faible épaisseur alimenté par le hacheur et créant un champ électromagnétique perpendiculaire au plan du support, et
un induit plat (4; 104) de faible épaisseur constitué de spires fermées sur elles-mêmes et placé sous le récipient 7 parallèlement au plan du récipient mobile,
le récipient 7 étant placé sur le support et l'induit 4 étant couplé magnétiquement avec l'inducteur (3; 103) de telle sorte que des courants de Foucault circulent dans l'induit.

2. Dispositif de chaufage selon la revendication 1 caractérisé en ce que le suport est un set de table ou un plateau destiné à être posé sur une table, et le récipient est un plat ou une assiette, destinée à être posée sur le support.

3. Dispositif de chauffage selon les revendications 1 et 2 caractérisé en ce que le champ électromagnétique créé par l'inducteur (3; 103) et les spires de l'induit (4; 104) ne sont pas symétriques de révolution de telle manière que le couplage magnétique de l'induit avec l'inducteur varie en fonction de la position angulaire relative de l'inducteur et de l'induit.

4. Dispositif de chauffage selon la revendication 3, caractérisé en ce que l'inducteur et l'induit sont de forme ovale.

5. Dispositif de chauffage selon la revendication 3, caractérisé en ce que l'inducteur (3; 103) comporte deux bobines adjacentes sensiblement circulaires (131, 135) branchées en série et créant des champs électromagnétiques de directions opposées et en ce que l'induit (4, 104) comporte deux ensembles adjacents de spires sensiblement circulaires (137; 138).

6. Dispositif de chauffage selon la revendication 1, caractérisé en ce que la fréquence du générateur de tension pulsée est de l'ordre de 300 kHz.

7. Dispositif de chauffage selon l'une quelconque des revendications 1 à 6, caractérisé en ce que le ou les inducteurs 3 ou 103 présentent une inductance élevée à la fréquence du générateur de tension et une résistance faible et en ce que l'induit 4 ou 104 présente, ramené au primaire, une inductance faible et une résistance sensiblement égale au rapport du carré de la tension de la source à la puissance nécessaire pour le chauffage.

8. Dispositif de chauffage selon l'une quelconque des revendications 1 à 7, caractérisé en ce que le support de récipient est un plateau 15 et en ce que la source d'énergie électrique est un générateur électrochimique.

9. Dispositif de chauffage selon la revendication 8, caractérisé en ce que le générateur électrochimique est un élément rechargeable 12 et en ce que le module d'alimentation comporte un dispositif de comparaison 14 de la tension aux bornes du ou des inducteurs et de la tension de la source et un circuit de contre-réaction 25 commandant le générateur de tension pulsée de telle manière que son rapport cyclique varie en sens inverse de la tension aux bornes du ou des inducteurs (3, 3').

10. Dispositif de chauffage selon l'une des revendications 8 ou 9, caractérisé en ce que le module d'alimentation est placé dans un logement 2 disposé le long d'un bord du plateau 15 et séparé du reste du plateau par un évidement 11 longitudinal.

11. Dispositif de chauffage selon l'une quelconque des revendications précédentes, caractérisé en ce que le support de récipient comporte deux inducteurs, un inducteur sensiblement central (3; 103) et un inducteur disposé dans un coin 3'.

12. Dispositif de chauffage selon l'une quelconque des revendications 1 à 7, caractérisé en ce que le support de récipient est un set de table souple 105 et en ce que la source d'énergie est un générateur électrochimique.

13. Dispositif de chauffage selon la revendication 1 à 7, caractérisé en ce que le support est un set de table souple et en ce que la source d'énergie électrique est un circuit redresseur branché sur un transformateur fixé sous la table et en ce que le module d'alimentation est disposé dans une partie du set de table 102 qui est repliée sous la table.

14. Dispositif de chauffage selon la revendication 13, caractérisé en ce que la table comporte un transformateur commun alimentant l'ensemble des sets de table disposés sur la table.

15. Dispositif de chauffage selon l'une quelconque des revendications précédentes, caractérisé en ce que le ou les inducteurs (3, 3', 103) sont réalisés sous la forme d'un circuit imprimé souple fixé sur un substrat.

16. Dispositif de chauffage selon les revendication 12 et 15, caractérisé en ce que le substrat est en matériau thermiquement isolant, tel que du liège ou du bois.

17. Dispositif de chauffage selon les revendications 12 et 15, caractérisé en ce que le substrat est en matériau antidérapant, tel que du caoutchouc.

18. Dispositif de chauffage selon les revendications 12 et 15, caractérisé en ce que le circuit imprimé est à double face et en ce que les enroulements des deux faces sont reliés en 134, 136.

19. Dispositif de chauffage selon l'une quelconque des revendications 1 à 7, caractérisé en ce que le ou les inducteurs sont intégrés dans la face supérieure de la table.

20. Dispositif de chauffage selon l'une quelconque des revendications 1 à 19, caractérisé en ce que l'induit (4; 104) est collé sous le récipient 7.

21. Dispositif de chauffage selon l'une quelconque des revendications 1 à 19, caractérisé en ce que l'induit est réalisé dans le fond du récipient lors de la fabrication de celui-ci.

22. Dispositif de chauffage selon l'une quelconque des revendications 1 à 19, caractérisé en ce que l'induit est réalisé par dépôt sur le fond du récipient.

23. Dispositif de chauffage selon l'une quelconque des revendications 1 à 22, caractérisé en ce que le support de récipient comporte au moins un bossage 154 disposé en correspondance avec un inducteur (152; 153) et servant au positionnement du récipient 7.

24. Dispositif de chauffage selon l'une quelconque des revendications 1 à 23, caractérisé en ce que le récipient comporte un thermomètre 20, tel qu'un thermomètre à cristaux liquides, sur sa face supérieure.

25. Dispositif de chauffage selon la revendication 1 caractérisé en ce que la source d'énergie du support mobile est un générateur électrochimique rechargeable, tel qu'une batterie, et en ce que le dit support comporte également un circuit abaisseur de tension pour recharger la batterie à partir du secteur.

26. Dispositif de chauffage selon la revendication 1 et 24 caractérisé en ce que le récipient est un biberon ou une bouteille et le support un thermos-chauffe biberon portable et autonome.

27. Dispositif selon la revendication 1 et 25 caractérisé en ce que le support est un sous verre ou une soucoupe et le récipient un verre ou une tasse.

28. Dispositif selon la revendication 1 et 25 caractérisé en ce que le récipient est une boite de conserve ou une barquette de produit surgelé et le support un boîtier isotherme transportable destiné à le réchauffer et à le maintenir au chaud.

## Patentansprüche

1. Wärmvorrichtung eines Kochgefäßes, dafür vorgesehen, die im besagten Gefäß enthaltenen Lebensmittel warm zu halten und dadurch gekennzeichnet, daß diese folgendes enthält:
einen beweglichen Gefäßträger, in welchem sich ein Stromversorgungsmodul (2; 102) befindet, das eine elektrische Energiequelle unter Sicherheits-Gleichspannung, einen Stromzerhacker mit Hochfrequenz, gespeist durch die besagte Quelle und zumindest einen flachen, über den Zerhacker gespeisten Induktor (3; 103) mit geringer Dicke, welcher ein elektromagnetisches Feld senkrecht zur Trägerebene bildet, enthält und
einen flachen Läufer (4; 104) mit geringer Dicke, bestehend aus in sich geschlossenen Windungen und unter dem Gefäß (7), parallel zur Ebene des beweglichen Gefäßes angebracht.
wobei das Gefäß (7) auf den Träger plaziert wird und der Läufer (4) magnetisch mit dem Induktor (3; 103) gekoppelt ist, damit die Foucaultschen Ströme im Läufer fließen.

2. Wärmvorrichtung nach Anspruch 1, dadurch gekennzeichnet, daß der Träger ein Tischset oder ein Tablett ist, dazu vorgesehen auf einen Tisch gestellt zu werden und daß das Gefäß eine Schüssel oder ein Teller ist, dafür bestimmt auf den Träger gestellt zu werden.

3. Wärmvorrichtung nach Anspruch 1 und Anspruch 2, dadurch gekennzeichnet, daß das vom Induktor (3; 103) gebildete elektromagnetische Feld und die Läuferwindungen (4; 104) nicht rotationssymmetrisch sind, so daß die magnetische Kopplung des Läufers mit dem Induktor je nach relativer Winkelstellung des Induktors und des Läufers variiert.

4. Wärmvorrichtung nach Anspruch 3, dadurch gekennzeichnet, daß der Induktor und der Läufer eine ovale Form haben.

5. Wärmvorrichtung nach Anspruch 3, dadurch gekennzeichnet, daß der Induktor (3; 103) zwei deutlich kreisförmige, angrenzende Spulen (131, 135) enthält, welche in Serie geschaltet sind und elektromagnetische Felder entgegengesetzter Richtungen bilden und daß der Läufer (4; 104) zwei angrenzende, deutlich kreisförmige Windungssätze (137, 138) enthält.

6. Wärmvorrichtung nach Anspruch 1, dadurch gekennzeichnet daß die impulsförmige Frequenz des Spannungsgenerators in der Größenordnung von 300 kHz ist.

7. Wärmvorrichtung nach einem der Ansprüche 1 bis 6, dadurch gekennzeichnet, daß der oder die Induktoren 3 oder 103 eine hohe Induktivität mit der Frequenz des Spannungsgenerators und einen schwachen Widerstand aufweisen und daß der Läufer (4) oder 104, auf die Primärseite reduziert, eine schwache Induktivität und einen Widerstand aufweisen, die deutlich gleich dem Quadratverhältnis der Spannung der Quelle und der, für das Erwärmen notwendigen Leistung sind.

8. Wärmvorrichtung nach einem der Ansprüche 1 bis 7, dadurch gekennzeichnet, daß der Gefäßträger ein Tablett 15 ist und daß die elektrische Stromquelle ein elektrochemischer Generator ist.

9. Wärmvorrichtung nach Anspruch 8, dadurch gekennzeichnet, daß der elektrochemische Generator ein aufladbares Element (12) ist und daß das Stromversorgungsmodul eine Vergleichsvorrichtung (14) der Spannung an den Klemmen des oder der Induktoren und der Spannung der Quelle enthält, und ein Gegenkopplungskreis 25, der den Generator der impulsförmigen Spannung steuert, sodaß sein zylindrisches Verhältnis in entgegengesetzter Richtung der Spannung an den Klemmen des oder der Induktoren (3, 3') variiert.

10. Wärmvorrichtung nach einem der Ansprüche 8 oder 9, dadurch gekennzeichnet, daß das Stromversorgungsmodul sich in einem Gehäuse (2) befindet, welches entlang der Kante des Tabletts (15) angebracht ist und vom Rest des Tabletts durch eine längliche Vertiefung (11) getrennt ist.

11. Wärmvorrichtung nach irgendeinem der vorstehenden Ansprüche, dadurch gekennzeichnet, daß der Gefäßträger zwei Induktoren enthält, ein Induktor im wesentlichen zentral (3; 103) und ein Induktor in einer Ecke (3') angebracht.

12. Wärmvorrichtung nach irgendeinem der Ansprüche 1 bis 7, dadurch gekennzeichnet, daß der Gefäßträger ein flexibles Tischset (105) und die Stromquelle ein elektrochemischer Generator ist.

13. Wärmvorrichtung nach einem der Ansprüche 1 bis 7, dadurch gekennzeichnet, daß der Träger ein flexibles Tischset ist und daß die elektrische Energiequelle ein Gleichrichterkreis ist, der an einen festen Transformator unter dem Tisch angeschlossen ist und daß das Stromversorgungsmodul in einem Teil des Tischsets 102 angebracht ist, das unter dem Tisch angewinkelt ist.

14. Wärmvorrichtung nach Anspruch 13, dadurch gekennzeichnet, daß der Tisch einen gemeinsamen Transformator enthält, der die gesamten, auf den Tisch gelegten Tischsets speist.

15. Wärmvorrichtung nach einem der vorstehenden Ansprüche, dadurch gekennzeichnet, daß der oder die Induktoren (3; 3'; 103) in Form einer biegsamen, gedruckten Schaltung realisiert sind, die auf ein Substrat befestigt ist.

16. Wärmvorrichtung nach den Ansprüchen 12 und 15, dadurch gekennzeichnet, daß das Substrat aus einem wärmeisolierenden Material wie Kork oder Holz ist.

17. Wärmvorrichtung nach den Ansprüchen 12 und 15, dadurch gekennzeichnet, daß das Substrat aus einem rutschfesten Material wie Gummi ist.

18. Wärmvorrichtung nach den Ansprüchen 12 und 15, dadurch gekennzeichnet, daß die gedruckte Schaltung doppelseitig ist und daß die Wicklungen der beiden Seiten in 134, 136 verbunden sind.

19. Wärmvorrichtung nach einem der Ansprüche 1 bis 7, dadurch gekennzeichnet, daß der oder die Induktoren in den oberen Teil des Tisches eingegliedert sind.

20. Wärmvorrichtung nach einem der Ansprüche 1 bis 19, dadurch gekennzeichnet, daß der Läufer (4; 104) unter das Gefäß 7 geklebt ist.

21. Wärmvorrichtung nach einem der Ansprüche 1 bis 19, dadurch gekennzeichnet, daß der Läufer im Gefäßboden anläßlich seiner Herstellung realisiert ist.

22. Wärmvorrichtung nach einem der Ansprüche 1 bis 19, dadurch gekennzeichnet daß der Läufer durch Ablage am Gefäßboden realisiert ist.

23. Wärmvorrichtung nach einem der Ansprüche 1 bis 22, dadurch gekennzeichnet, daß der Gefäßträger mindestens einen Buckel 154 aufweist, der in Übereinstimmung mit dem Induktor (152, 153) angebracht ist und zum Positionieren des Gefäßes 7 dient.

24. Wärmvorrichtung nach einem der Ansprüche 1 bis 23, dadurch gekennzeichnet, daß das Gefäß auf seiner Oberseite ein Thermometer 20, wie z.B. ein Flüssigquarzthermometer, enthält.

25. Wärmvorrichtung nach Anspruch 1, dadurch gekennzeichnet, daß die Energiequelle des beweglichen Trägers ein aufladbarer, elektrochemischer Generator, wie eine Batterie ist und daß der besagte Träger ebenfalls einen Spannungssenkkreis enthält, um die Batterie am Netz aufladen zu können.

26. Wärmvorrichtung nach Anspruch 1 und 24, dadurch gekennzeichnet, daß das Gefäß ein Babyfläschchen oder eine Flasche ist und der Träger ein tragbarer und selbständiger Thermos-Fläschchenwärmer ist.

27. Vorrichtung nach Anspruch 1 und 25, dadurch gekennzeichnet, daß der Träger ein Glasuntersetzer oder eine Untertasse und das Gefäß ein Glas oder eine Tasse ist.

28. Vorrichtung nach Anspruch 1 und 25, dadurch gekennzeichnet, daß das Gefäß eine Konservendose oder ein Tiefkühlproduktbehälter und der Träger ein zum Erhitzen und Warmhalten vorgesehenes, transportierbares Isothermgehäuse ist.

## Claims

1. A culinary container heating device for the purpose of keeping food contained in said container hot, characterised in that it comprises:
a mobile container support, in which are placed a delivery module (2; 102) comprising an electrical power source at safety direct voltage, a high frequency chopper controller supplied by said source and at least one flat inductor (3; 103) of no great thickness supplied by the chopper controller and creating an electromagnetic field perpendicular to the support plane, and
a flat armature (4; 104) of no great thickness
constituted by coils closed on themselves and placed under the container 7 parallel to the plane of the mobile container,
the container 7 being placed on the support and the armature 4 being coupled magnetically with the inductor (3; 103) in such a way that eddy currents circulate in the armature.

2. A heating device according to claim 1, characterised in that the support is a set of mats or a tray intended to be placed on a table, and the container is a dish or a plate, intended to be placed on the support.

3. A heating device according to claims 1 and 2, characterised in that the electromagnetic field created by the inductor (3; 103) and the coils of the armature (4; 104) are not symmetrical of revolution in such a way that the magnetic coupling of the armature with the inductor varies in accordance with the relative angular position of the inductor and the armature.

4. A heating device according to claim 3, characterised in that the inductor and the armature are oval in shape.

5. A heating device according to claim 3, characterised in that the inductor (3; 103) comprises two adjacent approximately circular coils (131, 135) connected in series and creating electromagnetic fields of opposite directions and in that the armature (4; 104) comprises two adjacent units of approximately circular coils (137; 138).

6. A heating device according to claim 1, characterised in that the frequency of the pulsed voltage generator is of the order of 300 kHz.

7. A heating device according to any one of claims 1 to 6, characterised in that the inductor or inductors 3 or 103 have high inductance at voltage generator frequency and low resistance and in that the armature 4 or 104 has, when reset to primary, low inductance and resistance approximately equal to the ratio of the square of the source voltage to the power required for heating.

8. A heating device according to any one of claims 1 to 7, characterised in that the container support is a tray 15 and in that the electrical power supply is an electrochemical generator.

9. A heating device according to claim 8, characterised in that the electrochemical generator is a rechargeable element 12 and in that the delivery module comprises a device 14 for comparing the voltage at the terminals of the inductor or inductors and the source voltage and a feedback circuit 25 controlling the pulsed voltage generator in such a way that its mark-space ratio varies in the reverse direction from the voltage at the terminals of the inductor or inductors (3, 3').

10. A heating device according to one of claims 8 or 9, characterised in that the delivery module is placed in a housing 2 placed along a tray edge 15 and separated from the rest of the tray by a longitudinal channel 11.

11. A heating device according to any one of the previous claims, characterised in that the container support comprises two inductors, an approximately central inductor (3; 103) and an inductor placed in a corner (3').

12. A heating device according to any one of claims 1 to 7, characterised in that the container support is a flexible set of mats 105 and in that the power source is an electrochemical generator.

13. A heating device according to claim 1 to 7, characterised in that the support is a flexible set of table mats and in that the electrical power source is a rectifying circuit connected to a transformer fixed under the table and in that the delivery module is placed in a part of the set of mats 102 which is folded up under the table.

14. A heating device according to claim 13, characterised in that the table comprises a common transformer supplying the entire set of mats placed on the table.

15. A heating device according to any one of the previous claims, characterised in that the inductor or inductors (3, 3', 103) are made in the form of a flexible printed circuit fixed on a substrate.

16. A heating device according to claims 12 and 15, characterised in that the substrate is of thermally insulating material, such as cork or wood.

17. A heating device according to claims 12 and 15, characterised in that the substrate is of a non-slip material, such as rubber.

18. A heating device according to claims 12 and 15, characterised in that the printed circuit is two sided and in that the windings of the two sides are connected at 134, 136.

19. A heating device according to any one of claims 1 to 7, characterised in that the inductor or inductors are incorporated into the upper face of the table.

20. A heating device according to any one of claims 1 to 19, characterised in that the armature (4; 104) is bonded under the container 7.

21. A heating device according to any one of claims 1 to 19, characterised in that the armature is made in the bottom of the container during its manufacture.

22. A heating device according to any one of claims 1 to 19, characterised in that the armature is made by deposition on the container bottom.

23. A heating device according to any one of claims 1 to 22, characterised in that the container support comprises at least one boss 154 placed in correspondence with an inductor (152; 153) and for use in positioning the container 7.

24. A heating device according to any one of claims 1 to 23, characterised in that the container comprises a thermometer 20, such as a liquid crystal thermometer, on its upper face.

25. A heating device according to claim 1, characterised in that the mobile support power source is a rechargeable electrochemical generator, such as a battery, and in that said support also comprises a voltage lowering circuit to recharge the battery from the mains supply.

26. A heating device according to claim 1 and 24, characterised in that the container is a feeding bottle or a bottle and the support a portable and autonomous thermos feeding bottle warmer.

27. A heating device according to claim 1 and 25, characterised in that the support is a glass saucer or a saucer and the container a glass or a cup.

28. A heating device according to claim 1 and 25, characterised in that the container is a can of preserves or a frozen product container and the support a transportable insulated casing intended for heating it and keeping it hot.
